# EUROPEAN PATENT SPECIFICATION

(11) **EP 4 194 258 B1**
(45) Date of publication and mention of the grant of the patent: **29.04.2026**
(21) Application number: 22212818.3
(22) Date of filing: 12.12.2022
(51) Int. Cl.: B60L 58/26

(54) **COOLING CIRCUIT AND VEHICLE WITH ELECTRICAL PROPULSION HAVING A COOLING CIRCUIT**
KÜHLKREISLAUF UND FAHRZEUG MIT ELEKTRISCHEM ANTRIEB MIT KÜHLKREISLAUF
CIRCUIT DE REFROIDISSEMENT ET VÉHICULE À PROPULSION ÉLECTRIQUE COMPORTANT UN CIRCUIT DE REFROIDISSEMENT

(30) Priority: 13.12.2021 IT 202100031226; 14.10.2022 IT 202200021249
(43) Date of publication of application: 14.06.2023
(73) Proprietor: Fast Charge Engineering S.r.l., 00162 Roma (IT)
(72) Inventor: MARTELLUCCI, Leone, 00162 ROMA (IT); FERRARO, Leonardo, 00162 ROMA (IT); MARANI, Filippo, 00162 ROMA (IT); GIANNINI, Marco, 00162 ROMA (IT)
(74) Representative: Studio Torta S.p.A.

(56) References cited:
- WO-A1-2021/214794
- US-A1- 2010 265 660
- US-A1- 2018 316 074

## Description

### Cross reference to related patent Applications

This patent application claims priority from Italian patent application no. 102021000031226 filed on December 13, 2021, and from Italian patent application no. 102022000021249 filed on October 14, 2022, the entire disclosure of which is incorporated herein by reference.

### Technical Field

The present invention relates to a cooling circuit for cooling an electrical energy storage system.

Preferentially, the present invention relates to a cooling circuit for a vehicle with electrical propulsion, i.e. stationary storage systems.

Advantageously, the present invention also relates to a vehicle with electrical propulsion having a cooling circuit.

The present invention finds advantageous application in vehicles with hybrid and fully electric propulsion to which the following discussion will explicitly refer without losing generality.

### Background

A hybrid vehicle comprises an internal combustion engine, which transmits the driving torque to the drive wheels by means of a mechanical transmission (parallel hybrid or powersplit) or to an electric generator (series hybrid), and at least one electric drive connected mechanically to the drive wheels and electrically powered by an electrical energy storage system. Normally, the electrical energy storage system comprises a pack of electrochemical batteries, i.e. electrostatic storage systems, which are connected to each other in parallel and series.

An electric vehicle comprises at least one electric drive mechanically connected to the drive wheels and electrically powered by an electrical energy storage system. Normally, the electrical energy storage system comprises a pack of electrochemical batteries which are connected to each other in parallel and series.

In the peculiar use of electrochemical batteries, i.e. electrostatic storage systems, in mobility and transport applications, but not exclusively, there is a need for high powers with low weights, this need results in storage systems that generate large amounts of heat during their use with particularly intense and characteristic operating cycles. This heat is generated mainly on the electrical poles and in the bodies of the electrochemical cells and must be quickly and effectively disposed of from the inside of the storage system container to prevent the storage system itself from irreversibly deteriorating.

In the art and in today's technical landscape, there are solutions that cool storage systems using air, either at room temperature or in turn cooled. The use of air to cool the electrical poles, which have a reduced heat exchange surface, does not have great benefits due to its low specific heat (and also taking into consideration the considerable energy consumption required by the air-cooling system, if provided) and requires the use of a refrigerant fluid. The problem consists in the low amount of heat that can be removed with air and thus the low efficiency of the system.

The use of refrigerant fluids, like for example described in US-A-2010265660, and known in the current technical landscape, consists of adding a third, generally metallic, element that is interposed between the body of the electrochemical battery, i.e. the electrostatic storage system, and the refrigerant fluid. The third element adds two heat exchange surfaces, the first one between it and the body of the storage system and the second one between it and the refrigerant fluid. The problem is therefore twofold and consists in the poor efficiency of having more exchange elements cooling the body of the electrochemical batteries, i.e. of the electrostatic storage systems, and not the electric pole, the site of the most heat generated.

An indirect cooling system is described in patent application IT PD2015A000048, which thus uses a refrigerant fluid in contact with a third element in turn in contact with the electrochemical batteries. This system presents the problems listed above and is not in direct contact with the pole of the storage system, the site of the most heat generated.

WO-A-2021214794 and US-A-2018316074 disclose cooling system, which are based on arranging the electrochemical batteries into holders and to flood the holders with a refrigerant liquid. Thereby, the system guarantees that the electrical contacts of the electrochemical batteries are sealed from the refrigerant liquid.

### Summary

Aim of the present invention is to provide a cooling circuit for cooling electrical energy storage systems, preferentially for a vehicle with electrical propulsion, which cooling system is free from the drawbacks described above and, at the same time, is easy and inexpensive to implement.

According to the present invention there is provided a cooling circuit for cooling an electrical energy storage system, preferentially for a vehicle with electrical propulsion.

In accordance with the present invention there is provided a cooling circuit as defined in the appended independent Claim.

Alternative and advantageous embodiments of the present invention are set forth in the dependent Claims.

In accordance with the present invention there is provided a vehicle with electrical propulsion according to Claim 15.

Furthermore, according to the present invention there is described a cooling circuit with a refrigerant liquid for cooling an electrical energy storage system, preferentially electrochemical batteries or electrostatic storage systems, comprising:
- an electrical energy storage system comprising a plurality of chemical batteries and/or electrostatic storage systems, wherein preferentially they are cylindrical or prismatic or envelope-shaped, adapted to power an electrical machine, preferentially an electric car;
- one or more modules, each module comprising a plurality of electrochemical batteries and/or electrostatic storage systems, assembled within containment structures;
- a radiator; and
- means for forced circulation of the refrigerant liquid, configured to generate a flow of the refrigerant liquid, through the electrical energy storage system and through the radiator.

In addition, each module comprises a mechanical structure having channeling walls that allow the refrigerant liquid, to directly lap the plurality of chemical batteries and/or electrostatic storage systems, without the presence of further heat exchange elements.

Each channeling wall may comprise and/or define an internal path aimed at creating a circulation, preferentially a unidirectional circulation, of the refrigerant liquid, according to a predetermined path and in which the refrigerant liquid, flows, in use, with the purpose of removing heat.

The path of the refrigerant fluid within the channeling walls may invest electrical connection elements aimed at creating the electrical connections in series and/or parallel of the plurality of chemical batteries and/or electrostatic storage systems.

The channeling walls may comprise internal walls configured to define the path.

Additionally, each internal wall may delimit and/or have an opening for the refrigerant fluid. The openings define at least partially the path.

According to some non-limiting embodiments, the cooling circuit may comprise a plurality of modules electrically connected, or not, to each other and with hydraulic connections that hydraulically connect them to each other.

According to some non-limiting embodiments, each module may comprise at least two channeling walls. The respective plurality of chemical batteries and/or electrostatic storage systems and/or the respective containment structure may be interposed between the at least two channeling walls.

According to some non-limiting embodiments, the channeling walls are at least partially fixed to the containment structures and relative lids or containment walls by means of bolted connections or dielectric adhesives and with the presence of elements adapted to prevent hydraulic leaks.

According to some non-limiting embodiments, each module may also comprise (external) containment walls configured to close the module itself.

Preferentially, each module may comprise at least two containment walls and the respective containment structure and the respective channeling walls may be interposed between the containment walls.

According to some possible embodiments, each containment wall may be connected to a respective channeling wall. Preferentially, each containment wall can be integral and/or made as a single piece together with the respective channeling wall.

According to some possible embodiments, one or more channeling walls can be integral and/or be made as a single piece together with the containment structure.

Preferentially, each channeling wall may comprise and/or define the internal path independently of the respective paths of the other channeling walls or the respective path of the other channeling wall.

Preferentially, each channeling wall may comprise a respective inlet and a respective outlet for the refrigerant liquid.

Preferentially, the channeling walls may define more than one path for the refrigerant liquid, each path being independent of the other.

Preferentially, the channeling walls may define at least two paths for the refrigerant liquid. One of the two paths may be configured so that the refrigerant fluid may lap respective first end portions of the electrochemical batteries and/or of the electrostatic storage systems and the second of the two paths may be configured so that the refrigerant fluid may lap respective second end portions of the electrochemical batteries and/or of the electrostatic storage systems opposite the respective first end portions.

Preferentially, at least one electrical contact of the plurality of chemical batteries and/or of the electrostatic storage systems, is, in use, in direct contact with the refrigerant liquid.

Preferentially, the internal walls can be arranged so that the path has a serpentine shape.

Preferentially, the openings may be arranged in alternation with each other, more preferentially to define the path, even more preferentially to define the serptine-shaped path.

According to some non-limiting embodiments, the cooling circuit may further comprise:
- a control unit for processing and controlling the operation of the circuit; and
- at least one temperature sensor placed in proximity to the plurality of chemical batteries and/or electrostatic storage systems, preferentially to determine a temperature of the plurality of chemical batteries and/or electrostatic storage systems.

The processing and control unit is operatively connected with the temperature sensor and with said circulation means in order to control the forced circulation means, preferentially a recirculation pump, as a function of the measured temperature and/or the residual energy and/or the power required of the storage system.

According to some non-limiting embodiments, the cooling circuit may also comprise at least one valve for the discharge of the refrigerant liquid.

According to some non-limiting embodiments, the containment structures may have a function of electrical insulator.

According to some non-limiting embodiments there is described a vehicle with electrical propulsion comprising a cooling circuit according to any one of the preceding Claims.

### Brief Description of the Figures

The present invention will now be described with reference to the attached drawings, which show a non-limiting embodiment thereof, wherein:
- Figure 1 is a schematic and plan view of a road vehicle with hybrid propulsion;
- Figure 2 is a schematic and plan view of an electrically propelled road vehicle;
- Figures 3a and 3b are perspective and schematic views of an electrical energy storage system having a plurality of electrochemical battery modules and/or cylindrical-shaped electrostatic storage systems;
- Figures 4a and 4b are perspective and schematic views of an electrical energy storage system having a plurality of modules of electrochemical batteries and/or prismatic, i.e. envelope-shaped, electrostatic storage systems that make up the electrical energy storage system;
- Figures 5a and 5b are schematic and perspective views of a matrix of support of the electrical energy storage system of Figure 3;
- Figures 6a and 6b are schematic and perspective views of a matrix of support of the electrical energy storage system of Figure 4;
- Figures 7 and 8 are schematic and perspective views of a module of electrochemical batteries and/or electrostatic storage systems, as in Figure 3 presenting a solution of direct cooling conduits of the poles;
- Figures 9 and 10 are schematic and perspective views of a module of electrochemical batteries and/or electrostatic storage systems, as in Figure 4 presenting a solution of direct cooling conduits of the poles;
- Figures 11a and 11b are schematic and perspective views of the outside of the container of the storage system presented in Figures 3 and 4;
- Figure 12 is a schematic view of a cooling circuit with refrigerant fluid for cooling the electrical energy storage system having electrochemical batteries and/or electrostatic storage systems, in accordance with the present invention;
- Figures 13a and 13b are a schematic and perspective view of the direct cooling circuit on the pole, as shown in Figures 7 and 8, in accordance with the present invention; and
- Figures 14a and 14b are schematic and perspective views of the direct cooling circuit on the pole, as shown in Figures 9 and 10, in accordance with the present invention.

### Description of embodiments

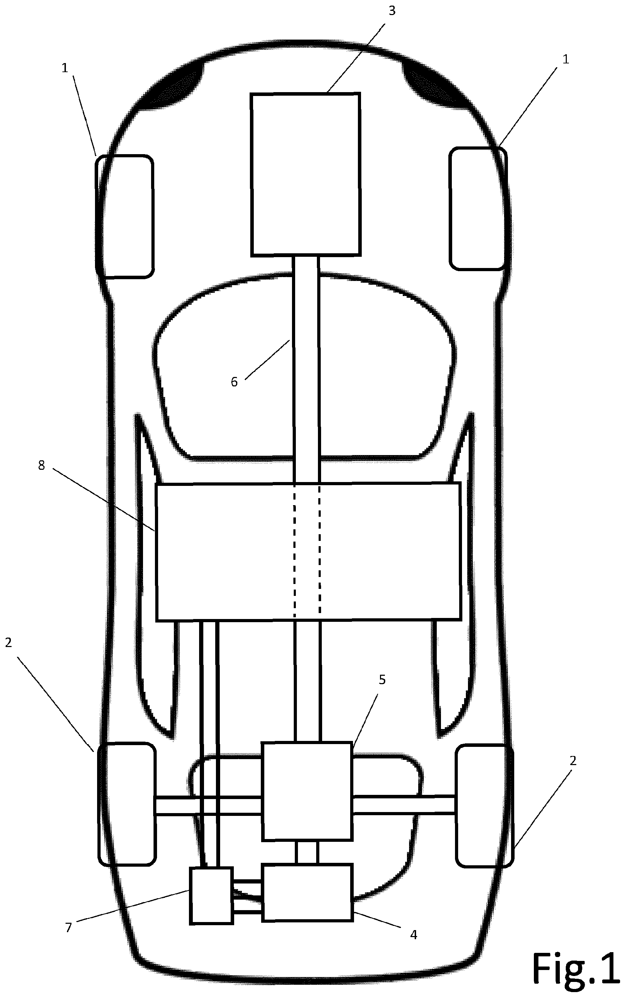

Figure 1 shows, as a whole, a vehicle with an electric propulsion. In the specific case of Figure 1, a vehicle with hybrid propulsion is shown.

In particular, the hybrid propulsion comprises both an electric propulsion and an endothermic propulsion.

In more detail, the vehicle may be provided with a hybrid powertrain system, consisting of an endothermic engine 3, preferentially for generating the endothermic propulsion, and of an electrical machine 4, preferentially for generating an electric propulsion.

In addition, the vehicle may comprise two front wheels 1 and two rear wheels. Preferentially, the front wheels 1 and/or the rear wheels 2 may be drive wheels. More preferentially, the drive wheels may receive a driving torque from the powertrain system.

According to some preferred but non-limiting embodiments, the vehicle 1, preferentially the electrical machine 4, may comprise an electrical energy storage system 8 configured to provide an electric power, preferentially to the electrical machine 4.

The endothermic motor 3 can be connected to a gearbox with differential 5 by means of a drive shaft 6 to which, in turn, the electrical machine 4 can be connected, both downstream and upstream thereof as well as either single or multiple with operation dedicated to a single axle or to the single wheel.

Preferentially, the electrical machine 4 can be connected, for example by means of electrical cables, to an inverter 7 which, in turn, can be connected for example by means of electrical cables to the electrical energy storage system 8.

According to some embodiments, the electrical machine 4 can operate both in a direct and retrograde manner, absorbing mechanical energy and generating electrical energy.

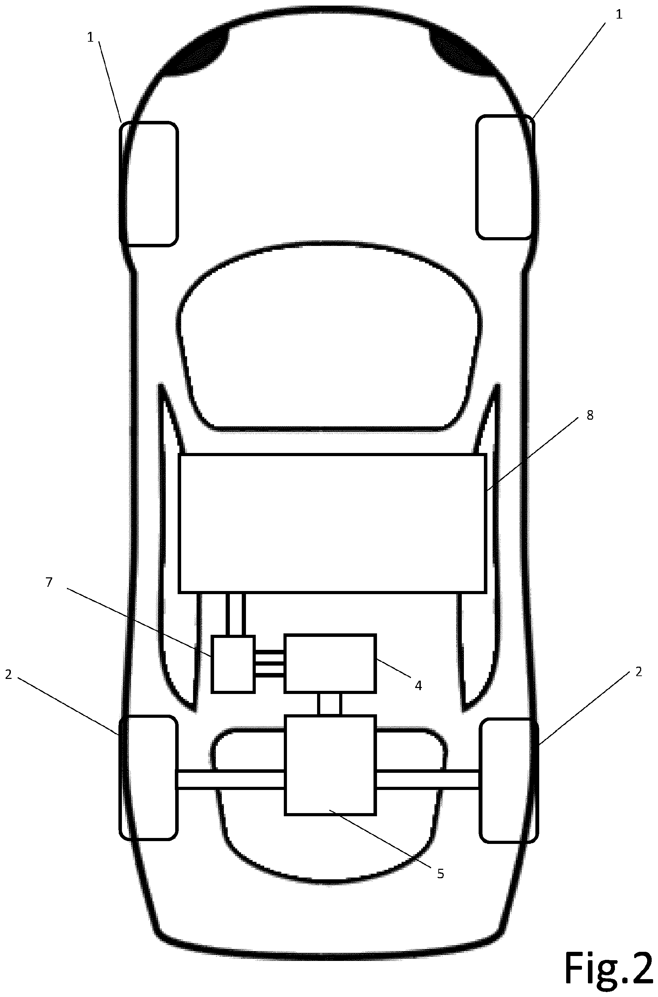

Figure 2 shows, as a whole, a vehicle with electric propulsion only.

The vehicle may comprise the electric powertrain system having the electrical machine 4.

Preferentially, the vehicle may be provided with two front wheels 1 and two rear wheels 2. Preferentially, the front wheels 1 and/or the rear wheels 2 may be drive wheels. More preferentially, the drive wheels may receive the driving torque from the electric powertrain system.

The electrical machine 4 can be connected both downstream and upstream of the same gearbox 5 as well as either single or multiple with operation dedicated to a single axle or to the single wheel.

The electrical machine 4 can be connected, by means of electrical cables, to the inverter 7 which, in turn, is connected by means of electrical cables to the electrical energy storage system 8. The electrical machine 4 can operate both in a direct and retrograde manner, absorbing mechanical energy and generating electrical energy.

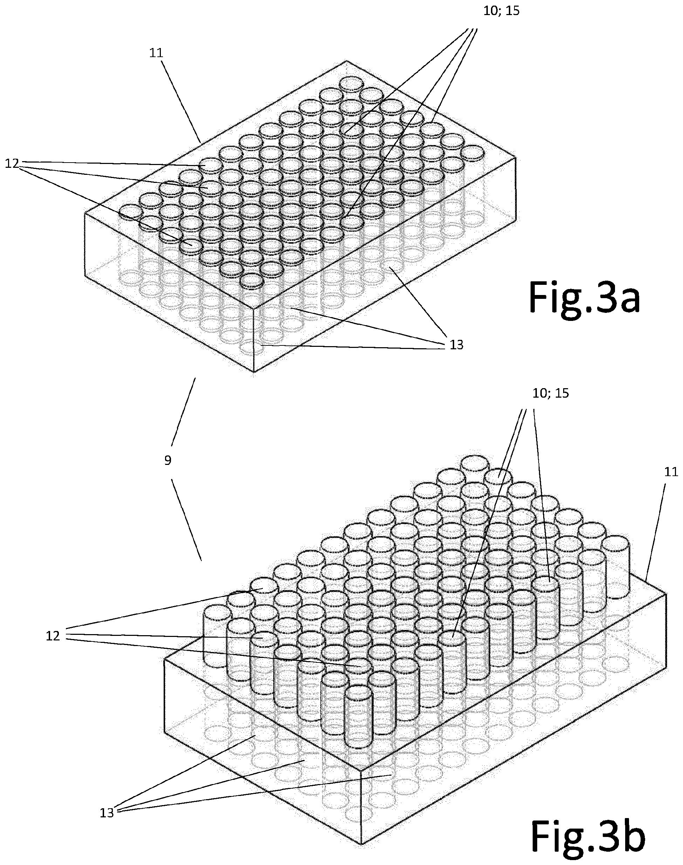

Figure 3a and 3b show modules 9, each module 9 having a plurality of electrochemical batteries 10 and/or electrostatic storage systems 15 (so as capacitors), cylindrical in shape within a containment structure 11 (in particular, of the respective module 9 itself).

Preferentially, the containment structure 11 can have geometric optimizations so as to allow the optimization of weights, production technologies and flows useful to a refrigerant liquid.

In Figure 3a, the electrochemical batteries 10 and/or the electrostatic storage systems 15 can be inserted into the containment structure 11 so as to allow mounting the electrical connections that form the series and the parallels to the ends of the electrochemical batteries 10 and/or of the electrical energy storage systems 15, on both sides of the containment structure 11. The electrical connections for the electrochemical batteries 10 and/or the electrostatic storage systems 15, of cylindrical shape are generally placed on both sides 12 and 13 of the electrical energy storage systems 8.

In Figure 3b, the electrochemical batteries 10 and/or the electrostatic storage systems 15 are partially extracted from the containment structure 11.

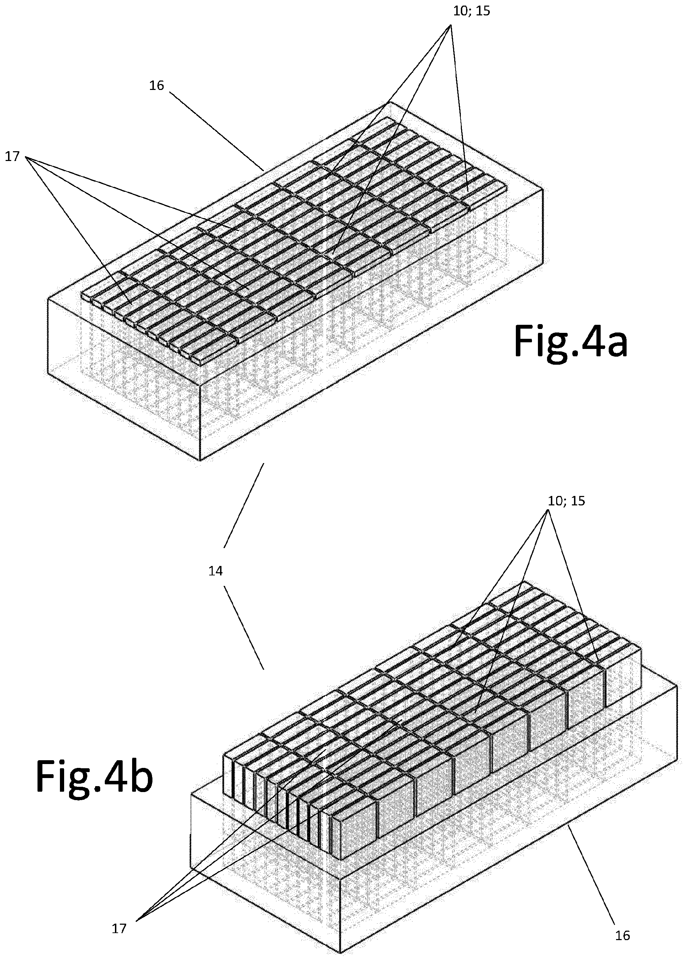

Figure 4a and 4b show modules 14, each module having a plurality of electrochemical batteries 10 and/or electrostatic storage systems 15, prismatic, i.e. envelope-shaped, within the containment structure 16.

Preferentially, the containment structure 16 can have geometric optimizations so as to allow the optimization of weights, production technologies and flows useful for the refrigerant liquid.

In Figure 4a, the electrochemical batteries 10 and/or the electrostatic storage systems 15 can be inserted into the containment structure 16 so as to allow mounting the electrical connections that form the series and the parallels to the ends of the electrochemical batteries 10 themselves and/or of the electrostatic storage systems 15, on the upper side of the containment structure 16.

Preferentially, the electrical connections for the electrochemical batteries 10 and/or the electrostatic storage systems 15 of cylindrical or prismatic shape are generally placed on the upper side 17 of the storage systems with this shape.

In Figure 4b the electrochemical batteries 10 and/or the electrostatic storage systems 15 are partially extracted from the containment structure 16.

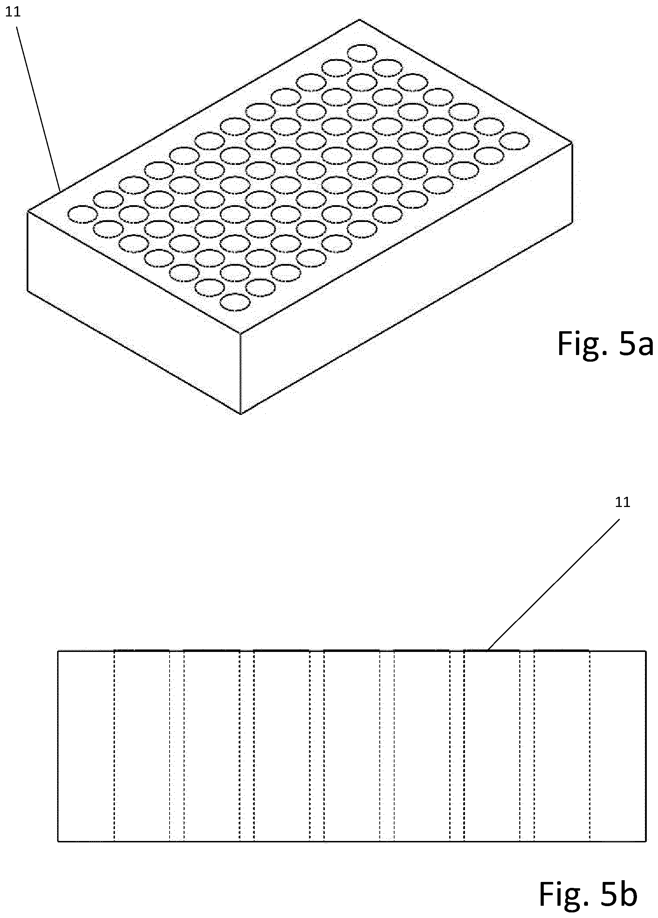

Figures 5a and 5b respectively show a perspective and lateral view of the containment structure 11.

Figure 5a shows circular holes able to accommodate the electrochemical batteries 10 and/or the electrostatic storage systems 15, cylindrical, and to prevent accidental movements due to, for example, a movement of the vehicle and/or impacts and/or shocks.

The containment structure 11 can withstand shocks and ensures that the electrochemical batteries 10 and/or the electrostatic storage systems 15 do not collapse in their assembly with risks related to short circuits.

The containment structure 11, seen as in Figure 5b, can generally have through holes capable of allowing the electrochemical batteries 10 and/or the electrostatic storage systems 15, to be electrically connected to each other in series and parallel on both sides 12 and 13.

Preferentially, the electrical connection lying on the sides 12 and 13 may comprise a conductive element, more preferentially copper or aluminum, joined by bolted connection or weld to the pole 12 and 13 of the respective electrochemical battery 10 and/or the electrostatic storage systems 15.

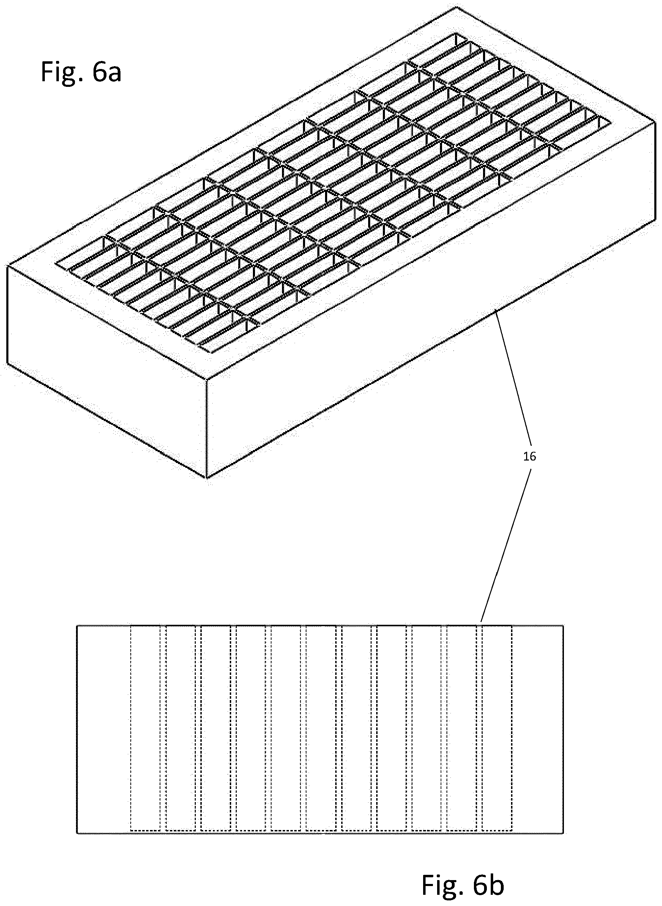

Figures 6a and 6b respectively show a perspective and lateral view of the containment structure 16.

Figure 6a shows the rectangular-shaped housings with able to accommodate the electrochemical batteries 10 and/or the electrostatic storage systems 15, which are prismatic, i.e. envelope-shaped, and prevent accidental movements due to, for example, the movement of the vehicle and/or impacts and/or shocks.

The containment structure 16 withstands shocks and ensures that the electrochemical batteries 10 and/or the electrostatic storage systems 15 do not collapse in their assembly with risks related to short circuits. The containment structure 16, seen as in Figure 6b, generally has non-through housings capable of allowing the electrochemical batteries 10 and/or the electrostatic storage systems 15 to be electrically connected to each other in series and parallel on the upper side 17.

Preferentially, the electrical connection lying on the side 17 consists of a conductive element, more preferentially copper or aluminum, joined by bolted connection or weld to the poles present on the upper side 17 of the respective electrochemical batteries 10 and/or of the respective electrostatic storage systems 15.

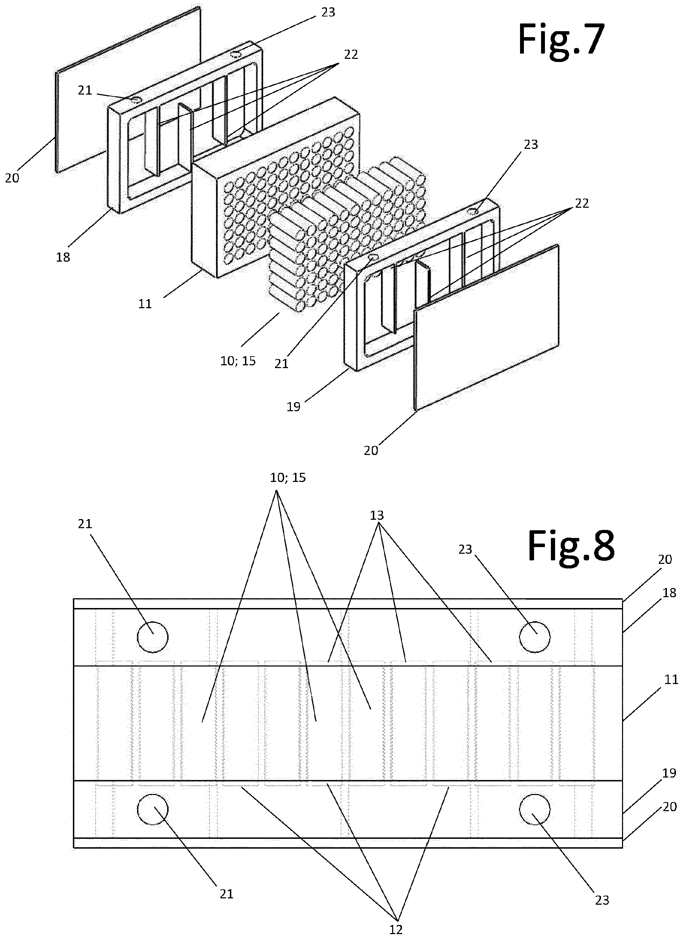

Figures 7 and 8 show two views of a module of the type shown in Figures 3a and 3b. Figure 7 is an exploded view, Figure 8 is a top view; the figures show the electrochemical batteries 10 and/or the electrostatic storage systems 15, the containment structure 11, also present in Figures 3a and 3b, channeling walls 18 and 19 and containment walls 20.

Each of the walls 18 and 19 can be connected, preferentially integrally, to the respective containment walls 20. Preferentially, each wall 18 and the respective containment wall 20 and each wall 19 and the respective containment wall 20 can be made as single pieces.

Preferentially, each module 9 may comprise a mechanical structure having the channeling walls 18 and 19.

For example, the mechanical structure may comprise the containment structures 11 and/or the containment structures 11 may define the mechanical structure.

According to some embodiments, at least one channeling wall 18 or 19 may be integrally connected to the respective containment structure 11.

The channeling walls 18 and 19 may be configured to allow the refrigerant liquid, to directly lap the plurality of chemical batteries 10 and/or electrostatic storage systems 15, preferentially to remove heat.

Preferentially, the channeling walls 18 and 19 are configured to allow a flow of the refrigerant fluid, preferentially to the refrigerant liquid, so that no further heat exchange elements are present.

Advantageously, the channeling walls 18 and 19 are configured to define a path, preferentially a unidirectional path, of the refrigerant liquid.

In more detail, the unidirectional flow indicates that the flow is a defined flow that does not flow randomly, for example from an inlet such as an inlet hole 21 to an outlet such as an outlet hole 23, but that must follow an obligatory path. In other words, the path of the fluid is precisely defined by the channeling walls 18 to cool in a defined (precise) order the plurality of chemical batteries 10 and/or the electrostatic storage systems 15.

In more detail, the channeling walls 18 and 19 have the task of allowing access of the refrigerant fluid through inlet holes 21 and leading it into a most thermally advantageous path. In particular, the specific path may be different for each module model, thanks to the internal walls 22 of the channeling walls 18 and 19.

In other words, each channeling wall 18 and 19 may comprise internal walls 22 defining the specific path. Preferentially, the internal walls 22 may be arranged so as to optimize heat removal.

In further detail, the channeling walls 18 and 19 have outlet holes 23 for the refrigerant fluid, preferentially for the hot refrigerant liquid.

According to some non-limiting preferred embodiments, the external containment walls 20 have a function of electrical insulator, towards the container of the respective module if in operation or towards operators and possible short circuits if outside the container, and hydraulic, they ensure that the refrigerant liquid does not leave the path consisting of the channeling walls 18 and 19, cooling in the desired way. Between the containment structure 11 and the channeling walls 18 and 19 and between the same channeling walls and the containment walls 20, a gasket can be interposed, for example of the O-ring type, either liquid or other type, depending on the design needs, the operating pressures of the system and the type of fluid used. The entire assembly will be kept in place by using a bolted connection in a preferential way.

Figure 8 shows how the two sides 12 and 13 of the electrochemical batteries 10 and/or the electrostatic storage systems 15 are protruding from the containment structure 11 in order to allow their easy and safe electrical connection in series and parallel and in order to ensure the complete immersion of the pole, present on sides 12 and 13, into the refrigerant liquid.

In particular, the refrigerant liquid, can circulate, to a negligible extent, in the housings of the electrochemical batteries 10 and/or of the electrostatic storage systems 15 also providing a negligible heat exchange on the bodies of the storage systems.

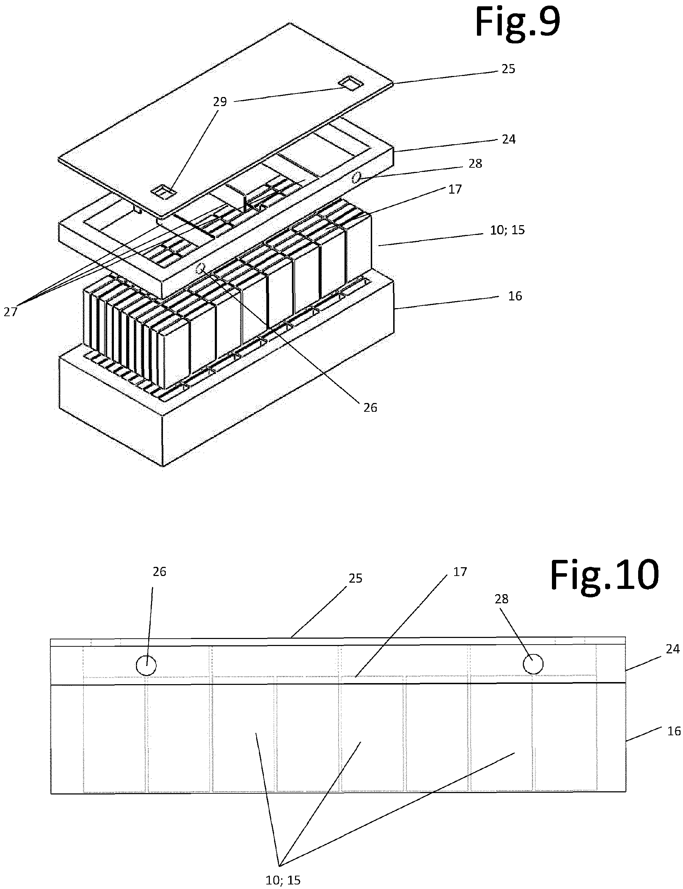

Figures 9 and 10 show two views of a module of the type shown in Figures 4a and 4b. Figure 9 is an exploded view, Figure 10 is a top view; in the figures the electrochemical batteries 10 and/or the electrostatic storage systems 15 are visible, the containment structure 16, also present in Figures 4a and 4b, the channeling wall 24 (which preferentially has a structure so as the walls 18 and 19) and the lid 25. The channeling wall 24 has the task of allowing access of the fluid through the inlet hole 26 and leading it in the most thermally advantageous path, different for each module model, thanks to the internal walls 27 (which preferentially have the same characteristics as the internal walls 22). The channeling wall 24 has an outlet hole 28 for the hot fluid. The lid 25 has a function of electrical insulator, towards the module container if in operation or towards operators and possible short circuits if outside the container, and hydraulic, ensures that the refrigerant liquid does not leave the path consisting of the channeling wall 24, cooling in the desired way. Between the containment structure 11 and the channeling wall 24 and between the wall itself and the cover 25, a gasket can be interposed, for example of the O-ring type, either liquid or other type, depending on the design needs, the operating pressures of the system and the type of fluid used. The entire assembly will be kept in place by using a bolted connection in a preferential way.

Figure 10 shows how the side 17 of the electrochemical batteries 10 and/or the electrostatic storage systems 15 protrude from the containment structure 16 in order to allow their easy and safe electrical connection in series and parallel and in order to ensure the complete immersion of the pole, present on the side 17, into the refrigerant liquid. The refrigerant liquid can circulate, to a negligible extent, in the housings of the electrochemical batteries 10 and/or of the electrostatic storage systems 15, also providing a negligible heat exchange on the bodies of the storage systems. Figure 9 shows the holes 29, housing of the electrical connection that joins the modules to create the complete storage system.

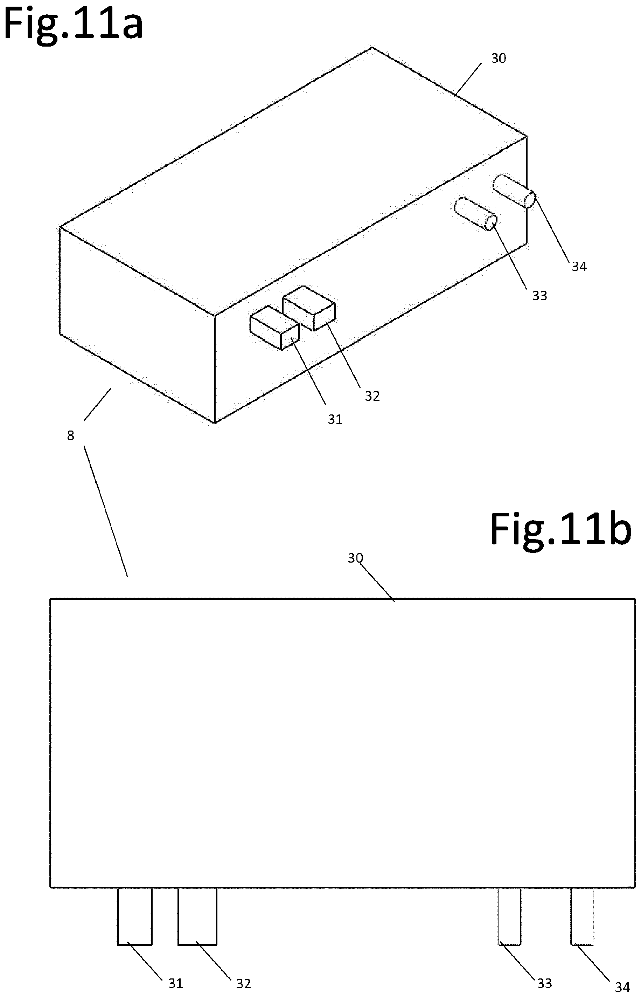

Figures 11a and 11b show a possible configuration of the electrical energy storage system 8 as a whole, from the outside. Figures 11a and 11b show the box 30, a low voltage connector 31 for controlling the storage system, a power connector 32 for connecting the direct cables to the inverter 7 to the storage system, an outlet pipe 33 of the refrigerant liquid and an inlet pipe 34 of the refrigerant liquid. The closure of the electrical energy storage system 8 can be placed in the upper part and can be done by bolted connection. Depending on the type of electrochemical batteries 10 and/or electrostatic storage systems 15, the electrical energy storage system 8 may be provided with a safety valve to prevent the accumulation of gas released from the batteries themselves.

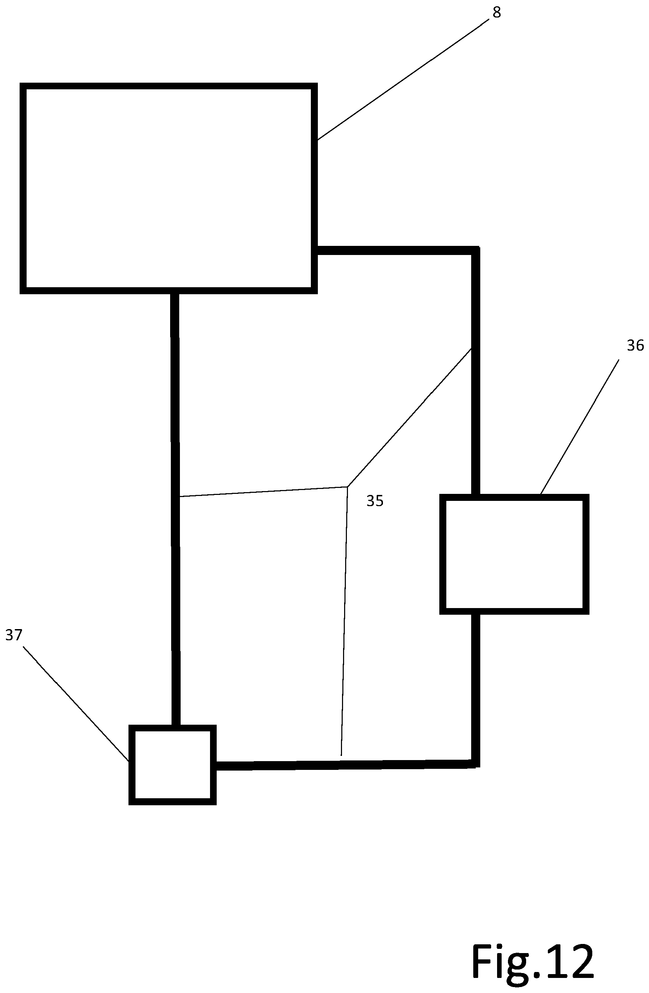

Figure 12 shows further details of a cooling circuit comprising a pipe 35 configured to carry the refrigerant liquid, out of the electrical energy storage system 8 towards a radiator 36, after which it goes to the pump 37 and is pushed back towards the electrical energy storage system 8. Alternative configurations can be arranged according to the number of pumps, radiators, storage systems and components facing onto the system itself.

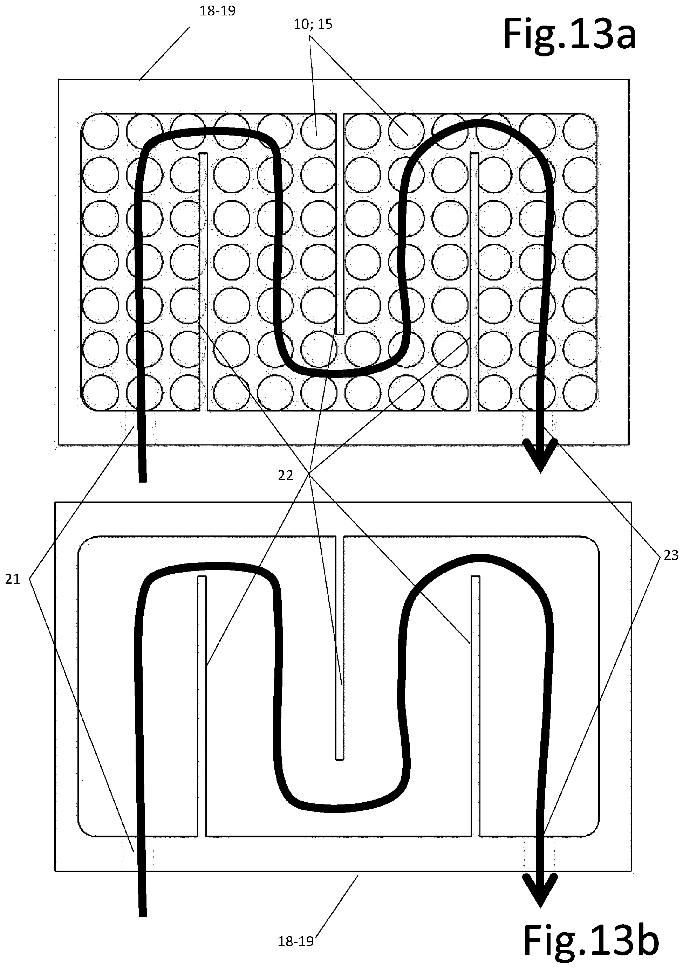

Figures 13a and 13b show details about a possible path that the refrigerant fluid travels within the channeling walls 18-19 due to the presence of the internal walls 22. The path of the fluid is schematized by the black arrow that accesses the module by means of the hole 21 and, after the path on the poles of the electrochemical batteries 10 and/or the electrostatic storage systems 15, it exits the module by means of the exit hole 23. The path constituted in this representation is merely exemplary and varies from module to module depending on the design needs.

In more detail and with reference to Figures 13a and 13b, the internal walls 22 may be arranged so as to define a serpentine-shaped path.

More specifically, thanks to the internal walls 22 it is possible to define the path, preferentially the unidirectional path, which allows to avoid the use of additional heat exchange elements connected to the electrochemical batteries 10 and/or to the electrostatic storage systems 15.

Preferentially, such a path may comprise a plurality of (substantially) linear portions and a plurality of (substantially) curved portions.

More specifically, each curved portion may connect two respective linear portions to each other.

According to some non-limiting preferred embodiments, the serpentine-shaped path may comprise at least four curved portions and at least five linear portions.

According to some non-limiting preferred embodiments, each channeling wall 18 and 19 may also comprise a frame and each internal wall 22 is connected to and protrudes from the frame (at least towards an interior delimited by the frame).

Preferentially, each internal wall 22 may comprise and/or define an opening for the refrigerant liquid. More preferentially, the group of openings may (at least partially) define the determined path of the refrigerant fluid.

Preferentially, each frame comprises a first side and a second side opposite the first side.

According to some embodiments, each internal wall 22 is connected to the first side or to the second side and protrudes towards but not up to the second side or the first side respectively.

In other words, each internal wall 22 that is connected to the first side defines an opening for the refrigerant liquid, together with the second side and each internal wall 22 that is connected to the second side defines an opening for the refrigerant liquid, together with the first side.

Preferentially, the internal walls 22 may be arranged in alternation with each other so that an internal wall 22 which is connected to the first side is followed by an internal wall 22 connected to the second side which in turn is followed by an internal wall 22 connected to the first side. In particular, in this way an alternation between the openings is obtained which one time is at (adjacent to) the second side and then at the first side.

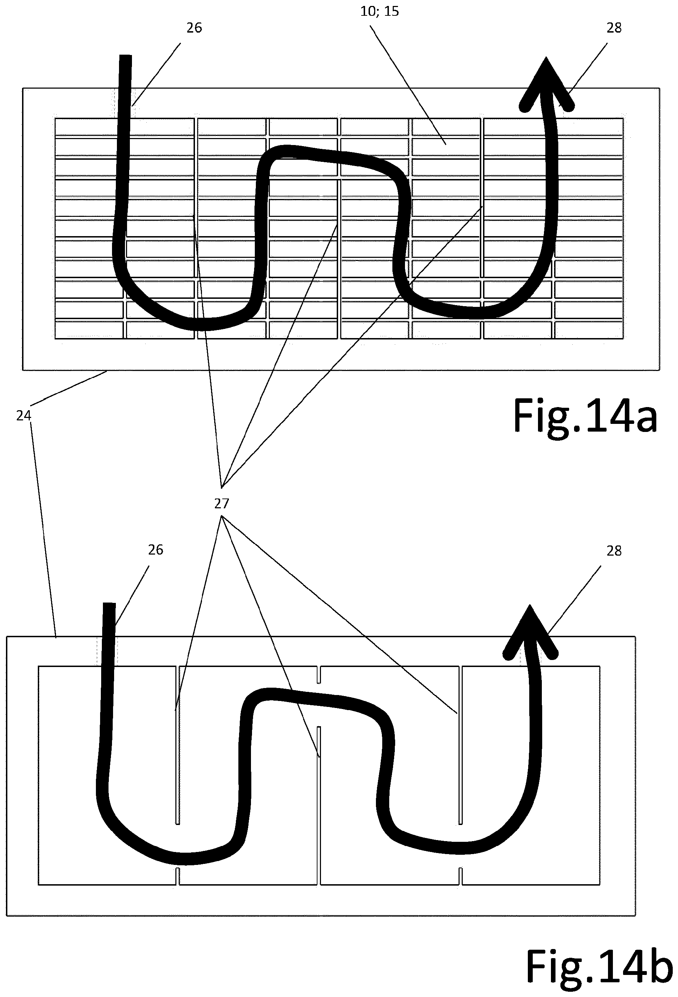

Figures 14a and 14b show details about a possible path that the refrigerant fluid travels within the channeling plane 24 due to the presence of the internal walls 27. The path of the fluid is schematized by the black arrow that accesses the module by means of the hole 26 and, after the path on the poles of the electrochemical batteries, i.e. electrostatic storage systems, 15, exits the module by means of the hole 28. The path constituted in this representation is merely exemplary and varies from module to module depending on the design needs.

Like for the embodiment of Figures 13a and 13b, also for the embodiment of Figure 14a and 14b, the path has a serpentine shape.

According to the embodiments of Figures 14a and 14b, each internal wall 22 may comprise a respective opening for the refrigerant liquid.

In particular, each internal wall 22 extends from the first side and the second side and each opening is interposed between the first side and the second side.

Preferentially, each opening is closer to the first side or to the second side. More preferentially, each opening is at (adjacent to) the first side or at the second side.

According to some preferred embodiments (see Figures 13a, 13b, 14a and 14b), the openings are arranged in alternation with each other. In other words, an opening at (adjacent to) the first side is followed by an opening at (adjacent to) the second side which in turn is followed by an opening at (adjacent to) the first side.

From an examination of the characteristics of the cooling circuit according to the present invention, the advantages that it allows to obtain are evident.

In particular, an effective cooling can be achieved with a simple structure.

Finally, it is clear that modifications and variations can be made to the cooling circuit described and shown herein without thereby departing from the scope of protection defined by the appended Claims.

## Claims

1. Cooling circuit with a refrigerant liquid, for cooling an electrical energy storage system, preferentially electrochemical batteries (10) and/or electrostatic storage systems (15), comprising:
- an electrical energy storage system (8) comprising a plurality of chemical batteries (10) and/or electrostatic storage systems (15), wherein they are preferentially cylindrical (10) or prismatic or envelope-shaped (15), adapted to power an electrical machine (4), preferentially an electrical machine (4) of a vehicle with electrical propulsion;
- one or more modules (9; 14), each module (9; 14) comprising a plurality of electrochemical batteries (10) and/or electrostatic storage systems (15), assembled within containment structures (11; 16);
- a radiator (36); and
- means for forced circulation (37) of the refrigerant liquid, configured to generate a flow of the refrigerant liquid, through the electrical energy storage system (8) and through the radiator (36);
wherein each module (9; 14) comprises a mechanical structure (11; 16) having channeling walls (18; 19; 24) that allow the refrigerant liquid, to directly lap the plurality of chemical batteries (10) and/or electrostatic storage systems (15), without the presence of further heat exchange elements;
wherein said channeling walls (18; 19; 24) comprise and/or define an internal path aimed at creating a circulation of the refrigerant liquid according to a predetermined path and in which the refrigerant liquid flows in use, with the purpose of removing heat;
wherein the path of the refrigerant liquid inside the channeling walls (18; 19; 24) invests electrical connection elements aimed at creating electrical connections in series and/or parallel of the plurality of chemical batteries (10) and/or electrostatic storage systems (15);
wherein the channeling walls (18; 19; 24) comprise internal walls (22) configured to define the path;
wherein each internal wall (22) delimits and/or has an opening for the refrigerant liquid; wherein the openings define at least partially the path.

2. Cooling circuit according to Claim 1, wherein the channeling walls (18; 19; 24) are at least partially fixed to the containment structures (11; 16), and preferentially relative lids or containment walls (20; 25) by means of bolted connections or dielectric adhesives and with the presence of elements adapted to prevent hydraulic leaks.

3. Cooling circuit according to Claim 1 or 2, wherein each module comprises at least two channeling walls (18; 19; 24);
wherein the respective plurality of chemical batteries (10) and/or electrostatic storage systems (15) and/or the respective containment structure (11; 16) is interposed between the at least two channeling walls (18; 19; 25).

4. Cooling circuit according to any one of the preceding Claims, wherein said channeling walls (18; 19; 24) comprise and/or define an internal path aimed at creating an unidirectional circulation of the refrigerant liquid according to a predetermined path and in which the refrigerant fluid, preferentially the refrigerant liquid, flows, in use, with the purpose of removing heat.

5. Cooling circuit according to any one of the preceding Claims, wherein each channeling wall (18; 19; 24) comprises and/or defines a respective internal path aimed at creating a circulation, preferentially a unidirectional circulation, of the refrigerant liquid according to a predetermined path and in which the refrigerant liquid flows, in use, with the purpose of removing heat;
wherein each internal path is independent of the other path(s).

6. Cooling circuit according to any one of the preceding claims, wherein the channeling walls (18; 19) comprise and/or define at least two paths for the refrigerant fluid, in particular the refrigerant liquid;
wherein one of the two paths is configured so that the refrigerant fluid laps respective first end portions of the electrochemical batteries and/or of the electrostatic storage systems and the second of the two paths is configured so that the refrigerant liquid laps respective second end portions of the electrochemical batteries (10) and/or of the electrostatic storage systems (15) opposite the respective first end portions.

7. Cooling circuit according to any one of the preceding claims, wherein at least one electrical contact of the plurality of chemical batteries (10) and/or electrostatic storage systems (15), is, in use, in direct contact with the refrigerant liquid.

8. Cooling circuit according any one of the preceding claims, wherein the internal walls (22) are arranged so that the path has a serpentine shape.

9. Cooling circuit according to the preceding Claims, further comprising:
- a control unit for processing and controlling the operation of the circuit; and
- at least one temperature sensor placed in proximity to the plurality of chemical batteries (10) and/or electrostatic storage systems (15), preferentially to determine a temperature of the plurality of chemical batteries (10) and/or electrostatic storage systems (15);
wherein the processing and control unit is operatively connected with the temperature sensor and with said circulation means (37) so as to control the forced circulation means (37) as a function of the measured temperature and/or the residual energy and/or the power required by the storage system.

10. Cooling circuit according to one of the preceding Claims, comprising at least one valve for the discharge of the refrigerant liquid.

11. Cooling circuit according to any one of the preceding Claims, wherein the containment structures (10; 11) have a function of electrical insulator.

12. Vehicle with electrical propulsion comprising a cooling circuit according to any one of the preceding Claims.

## Patentansprüche

1. Kühlkreislauf mit einer Kältemittelflüssigkeit zur Kühlung eines elektrischen Energiespeichersystems, vorzugsweise elektrochemischer Batterien (10) und/oder elektrostatischer Speichersysteme (15), umfassend:
- ein elektrisches Energiespeichersystem (8), umfassend eine Vielzahl von chemischen Batterien (10) und/oder elektrostatischen Speichersystemen (15), wobei diese vorzugsweise zylindrisch (10) oder prismatisch oder hüllenförmig (15) sind, das geeignet ist, um eine elektrische Maschine (4), vorzugsweise eine elektrische Maschine (4) eines Fahrzeugs mit elektrischem Antrieb, zu versorgen;
- ein oder mehrere Module (9; 14), wobei jedes Modul (9; 14) eine Vielzahl von elektrochemischen Batterien (10) und/oder elektrostatischen Speichersystemen (15) umfasst, die innerhalb von Gehäusestrukturen (11; 16) zusammengebaut sind;
- einen Kühler (36) und
- Mittel zur Zwangsumwälzung (37) der Kältemittelflüssigkeit, die ausgelegt sind, um einen Strom der Kältemittelflüssigkeit durch das elektrische Energiespeichersystem (8) und durch den Kühler (36) erzeugen,
wobei jedes Modul (9; 14) eine mechanische Struktur (11; 16) umfasst, aufweisend kanalisierende Wände (18; 19; 24), die es ermöglichen, dass die Kältemittelflüssigkeit die Vielzahl von chemischen Batterien (10) und/oder elektrostatischen Speichersystemen (15) direkt umströmt, ohne dass weitere Wärmetauschelemente vorgesehen sind,
wobei die kanalisierenden Wände (18; 19; 24) einen inneren Weg umfassen und/oder definieren, der darauf abzielt, eine Zirkulation der Kältemittelflüssigkeit gemäß einem vorbestimmten Weg zu erzeugen, und in dem die Kältemittelflüssigkeit bei Gebrauch strömt, mit dem Zweck, Wärme abzuführen,
wobei der Weg der Kältemittelflüssigkeit innerhalb der kanalisierenden Wände (18; 19; 24) elektrische Verbindungselemente einbezieht, die darauf abzielen, elektrische Verbindungen in Reihe und/oder parallel zu der Vielzahl von chemischen Batterien (10) und/oder elektrostatischen Speichersystemen (15) herzustellen,
wobei die kanalisierenden Wände (18; 19; 24) innere Wände (22) umfassen, die ausgelegt sind, um den Weg zu definieren,
wobei jede innere Wand (22) eine Öffnung für die Kältemittelflüssigkeit begrenzt und/oder aufweist, wobei die Öffnungen zumindest teilweise den Weg definieren.

2. Kühlkreislauf nach Anspruch 1, wobei die kanalisierenden Wände (18; 19; 24) zumindest teilweise an den Gehäusestrukturen (11; 16) und vorzugsweise entsprechenden Deckeln oder Gehäusewänden (20; 25) mittels Schraubverbindungen oder dielektrischer Klebstoffe befestigt sind, und wobei Elemente vorgesehen sind, die geeignet sind, um hydraulische Leckagen zu verhindern.

3. Kühlkreislauf nach Anspruch 1 oder 2, wobei jedes Modul mindestens zwei kanalisierende Wände (18; 19; 24) umfasst,
wobei die jeweilige Vielzahl von chemischen Batterien (10) und/oder elektrostatischen Speichersystemen (15) und/oder die jeweilige Gehäusestruktur (11; 16) zwischen den mindestens zwei kanalisierenden Wänden (18; 19; 25) eingesetzt ist bzw. sind.

4. Kühlkreislauf nach einem der vorhergehenden Ansprüche, wobei die kanalisierenden Wände (18; 19; 24) einen inneren Weg umfassen und/oder definieren, der darauf abzielt, eine Zirkulation der Kältemittelflüssigkeit in eine Richtung gemäß einem vorbestimmten Weg zu erzeugen, und in dem das Kältemittel, vorzugsweise die Kältemittelflüssigkeit, bei Gebrauch strömt, mit dem Zweck, Wärme abzuführen.

5. Kühlkreislauf nach einem der vorhergehenden Ansprüche, wobei jede kanalisierende Wand (18; 19; 24) einen jeweiligen inneren Weg umfasst und/oder definiert, der darauf abzielt, eine Zirkulation, vorzugsweise eine Zirkulation in eine Richtung, der Kältemittelflüssigkeit gemäß einem vorbestimmten Weg zu erzeugen, und in dem die Kältemittelflüssigkeit bei Gebrauch strömt, mit dem Zweck, Wärme abzuführen,
wobei jeder innere Weg von dem/den anderen Weg(en) unabhängig ist.

6. Kühlkreislauf nach einem der vorhergehenden Ansprüche, wobei die kanalisierenden Wände (18; 19) mindestens zwei Wege für das Kältemittel, insbesondere die Kältemittelflüssigkeit, umfassen und/oder definieren,
wobei einer der beiden Wege derart ausgelegt ist, dass das Kältemittel jeweilige erste Endabschnitte der elektrochemischen Batterien und/oder der elektrostatischen Speichersysteme umströmt, und der zweite der beiden Wege derart ausgelegt ist, dass die Kältemittelflüssigkeit jeweilige zweite Endabschnitte der elektrochemischen Batterien (10) und/oder der elektrostatischen Speichersysteme (15) umströmt, die den jeweiligen ersten Endabschnitten entgegengesetzt sind.

7. Kühlkreislauf nach einem der vorhergehenden Ansprüche, wobei mindestens ein elektrischer Kontakt der Vielzahl von chemischen Batterien (10) und/oder elektrostatischen Speichersysteme (15) bei Gebrauch in direktem Kontakt mit der Kältemittelflüssigkeit ist.

8. Kühlkreislauf nach einem der vorhergehenden Ansprüche, wobei die inneren Wände (22) so angeordnet sind, dass der Weg eine Serpentinenform aufweist.

9. Kühlkreislauf nach den vorhergehenden Ansprüchen, ferner umfassend:
- eine Steuereinheit zur Verarbeitung und Steuerung des Betriebs des Kreislaufs und
- mindestens einen Temperatursensor, der in der Nähe der Vielzahl von chemischen Batterien (10) und/oder elektrostatischen Speichersystemen (15) platziert ist, vorzugsweise um eine Temperatur der Vielzahl von chemischen Batterien (10) und/oder elektrostatischen Speichersysteme (15) zu bestimmen,
wobei die Verarbeitungs- und Steuereinheit betriebswirksam mit dem Temperatursensor und mit den Umwälzungsmitteln (37) verbunden ist, sodass die Zwangsumwälzungsmittel (37) abhängig von der gemessenen Temperatur und/oder der Restenergie und/oder der vom Speichersystem geforderten Leistung gesteuert werden.

10. Kühlkreislauf nach einem der vorhergehenden Ansprüche, umfassend mindestens ein Ventil zur Ableitung der Kältemittelflüssigkeit.

11. Kühlkreislauf nach einem der vorhergehenden Ansprüche, wobei die Gehäusestrukturen (10; 11) eine Funktion als elektrischer Isolator aufweisen.

12. Fahrzeug mit elektrischem Antrieb, umfassend einen Kühlkreislauf nach einem der vorhergehenden Ansprüche.

## Revendications

1. Circuit de refroidissement avec un liquide réfrigérant, pour refroidir un système de stockage d'énergie électrique, de préférence des batteries électrochimiques (10) et/ou des systèmes de stockage électrostatique (15), comprenant :
- un système de stockage d'énergie électrique (8) comprenant une pluralité de batteries chimiques (10) et/ou systèmes de stockage électrostatique (15), dans lequel ils sont de préférence cylindriques (10) ou prismatiques ou en forme d'enveloppe (15), adapté pour alimenter une machine électrique (4), de préférence une machine électrique (4) d'un véhicule à propulsion électrique ;
- un ou plusieurs modules (9 ; 14), chaque module (9 ; 14) comprenant une pluralité de batteries électrochimiques (10) et/ou systèmes de stockage électrostatique (15), assemblés dans des structures de confinement (11 ; 16) ;
- un radiateur (36) ; et
- des moyens de circulation forcée (37) du liquide réfrigérant, configurés pour générer un flux de liquide réfrigérant à travers le système de stockage d'énergie électrique (8) et à travers le radiateur (36) ;
dans lequel chaque module (9 ; 14) comprend une structure mécanique (11 ; 16) dotée de parois de canalisation (18 ; 19 ; 24) qui permettent au liquide réfrigérant de recouvrir directement la pluralité de batteries chimiques (10) et/ou systèmes de stockage électrostatique (15), sans la présence d'autres éléments d'échange de chaleur ;
dans lequel lesdites parois de canalisation (18 ; 19 ; 24) comprennent et/ou définissent un chemin interne visant à créer une circulation du liquide réfrigérant selon un chemin prédéterminé et dans lequel le liquide réfrigérant s'écoule en cours d'utilisation, dans le but d'évacuer la chaleur ;
dans lequel le chemin du liquide réfrigérant à l'intérieur des parois de canalisation (18 ; 19 ; 24) engage des éléments de connexion électrique destinés à créer des connexions électriques en série et/ou en parallèle de la pluralité de batteries chimiques (10) et/ou systèmes de stockage électrostatique (15) ;
dans lequel les parois de canalisation (18 ; 19 ; 24) comprennent des parois internes (22) configurées pour définir le chemin ;
dans lequel chaque paroi interne (22) délimite et/ou présente une ouverture pour le liquide réfrigérant ; dans lequel les ouvertures définissent au moins partiellement le chemin.

2. Circuit de refroidissement selon la revendication 1, dans lequel les parois de canalisation (18 ; 19 ; 24) sont au moins partiellement fixées aux structures de confinement (11 ; 16), et de préférence à des couvercles correspondants ou à des parois de confinement (20 ; 25) au moyen de connexions boulonnées ou d'adhésifs diélectriques et avec la présence d'éléments adaptés pour empêcher des fuites hydrauliques.

3. Circuit de refroidissement selon la revendication 1 ou 2, dans lequel chaque module comprend au moins deux parois de canalisation (18 ; 19 ; 24) ;
dans lequel la pluralité respective de batteries chimiques (10) et/ou systèmes de stockage électrostatique (15) et/ou la structure de confinement respective (11 ; 16) est interposée entre les au moins deux parois de canalisation (18 ; 19 ; 25).

4. Circuit de refroidissement selon l'une quelconque des revendications précédentes, dans lequel lesdites parois de canalisation (18 ; 19 ; 24) comprennent et/ou définissent un chemin interne visant à créer une circulation unidirectionnelle du liquide réfrigérant selon un chemin prédéterminé et dans lequel le fluide réfrigérant, de préférence le liquide réfrigérant, s'écoule, en cours d'utilisation, dans le but d'évacuer la chaleur.

5. Circuit de refroidissement selon l'une quelconque des revendications précédentes, dans lequel chaque paroi de canalisation (18 ; 19 ; 24) comprend et/ou définit un chemin interne respectif visant à créer une circulation, de préférence une circulation unidirectionnelle, du liquide réfrigérant selon un chemin prédéterminé et dans lequel le liquide réfrigérant s'écoule, en cours d'utilisation, dans le but d'évacuer la chaleur ;
dans lequel chaque chemin interne est indépendant du ou des autres chemins.

6. Circuit de refroidissement selon l'une quelconque des revendications précédentes, dans lequel les parois de canalisation (18 ; 19) comprennent et/ou définissent au moins deux chemins pour le fluide réfrigérant, en particulier le liquide réfrigérant ;
dans lequel l'un des deux chemins est configuré de manière à ce que le fluide réfrigérant recouvre les premières parties d'extrémité respectives des batteries électrochimiques et/ou des systèmes de stockage électrostatique et le second des deux chemins est configuré de manière à ce que le liquide réfrigérant recouvre les secondes parties d'extrémité respectives des batteries électrochimiques (10) et/ou des systèmes de stockage électrostatique (15), opposées aux premières parties d'extrémité respectives.

7. Circuit de refroidissement selon l'une quelconque des revendications précédentes, dans lequel au moins un contact électrique de la pluralité de batteries chimiques (10) et/ou systèmes de stockage électrostatique (15) est, en cours d'utilisation, en contact direct avec le liquide réfrigérant.

8. Circuit de refroidissement selon l'une quelconque des revendications précédentes, dans lequel les parois internes (22) sont disposées de manière à ce que le chemin ait une forme de serpentin.

9. Circuit de refroidissement selon les revendications précédentes, comprenant en outre :
- une unité de commande pour le traitement et la commande du fonctionnement du circuit ; et
- au moins un capteur de température placé à proximité de la pluralité de batteries chimiques (10) et/ou systèmes de stockage électrostatique (15), de préférence pour déterminer une température de la pluralité de batteries chimiques (10) et/ou systèmes de stockage électrostatique (15) ;
dans lequel l'unité de traitement et de commande est reliée de manière opérationnelle au capteur de température et auxdits moyens de circulation (37) afin de commander les moyens de circulation forcée (37) en fonction de la température mesurée et/ou de l'énergie résiduelle et/ou de la puissance requise par le système de stockage.

10. Circuit de refroidissement selon l'une des revendications précédentes, comprenant au moins une vanne pour l'évacuation du liquide réfrigérant.

11. Circuit de refroidissement selon l'une quelconque des revendications précédentes, dans lequel les structures de confinement (10 ; 11) ont une fonction d'isolant électrique.

12. Véhicule à propulsion électrique comprenant un circuit de refroidissement selon l'une quelconque des revendications précédentes.
